# EUROPEAN PATENT APPLICATION

(11) **EP 1 161 865 A2**
(43) Date of publication of application: **12.12.2001**
(21) Application number: 01112952.5
(22) Date of filing: 06.06.2001
(51) Int. Cl.: A01M 1/14

(54) **Support for adhesives used as a trap in devices for capturing insects**

(30) Priority: 09.06.2000 IT PD000159
(71) Applicant: MULTITECNO S.r.l., 30025 Fossalta Di Portogruaro (Prov. of Venezia) (IT)
(72) Inventor: Reatti, Guido, 35128 Padova (IT)
(74) Representative: Modiano, Guido, Dr.-Ing.

(57) **Abstract**

A support for adhesives used as a trap in insect capturing devices; the support is of the type that comprises a sheet (10) made of flexible material, on a surface (11) of which, designed to be exposed, a layer of adhesive is spread; the layer constitutes a trap for insects that land thereon. The surface of the support to be exposed is treated with at least one ink which contains luminescent pigments.

## Description

The present invention relates to a support for adhesives used as a trap in devices for capturing insects.

Devices for capturing insects, particularly flies, adapted for example for wall-mounting are already known.

These devices comprise an open box-like support which contains a light source, arranged so as to be visible, and a sheet of paper-like material which is unwound from a dispenser roller and wound back onto another roller when used.

A layer of adhesive is spread onto the exposed surface of the sheet, which is white.

The concealed side of the sheet of paper-like material is instead coated with silicone in order to prevent the regions rolled up in the roll from sticking.

The light source, arranged adjacent to the sheet of paper-like material, is constituted by an actinic mercury-vapor fluorescent lamp with an internal coating which converts the radiation of the mercury discharge into a broad ultraviolet wavelength spectrum.

The resulting emissions are between 300 and 400 nm, with a peak of 365 nm; this wavelength has the power to attract many insects, particularly flies.

Accordingly, the insects attracted by the luminescence of the lamp land on the adhesive-coated surface of the sheet of paper-like material and remain trapped thereon.

The active region of the sheet can be changed by winding the used roller, and correspondingly unwinding of a new region from the roller with the new roll.

In combating flying insects, and particularly flies, it is necessary to take into account the exponential demographic explosion that occurs suddenly in summer, when the average daily temperature is 22-26 °C and solar radiation is at high levels.

In these conditions, these creatures are highly prolific and it would be convenient to increase the capturing capability accordingly.

The aim of the present invention is to increase the insect capture efficiency of supports for adhesives used as a trap in the above described insect capturing devices.

Within this aim, an object of the invention is to provide a support whose manufacture does not entail particular technical difficulties with respect to the types currently in use.

Another object is to provide a support which can be marketed at a competitive price with respect to known ones.

This aim and these and other objects which will become better apparent hereinafter are achieved by a support for adhesives used as a trap in insect capturing devices comprising a sheet made of flexible material, on a surface of which, arrangeable to be exposed, a layer of adhesive is spread, said layer constituting a trap for the insects that land thereon, characterized in that said surface to be exposed is treated with at least an ink which contains luminescent pigments.

Advantageously, the sheet of flexible material is unwound from a dispenser roller and wound onto a motorized takeup roller with multiple rotation speeds.

Further characteristics and advantages of the invention will become better apparent from the detailed description of an embodiment thereof, illustrated only by way of non-limitative example in the accompanying drawings, wherein:
Figure 1 is a perspective view of a portion of the support according to the invention;
Figure 2 is an enlarged-scale view of a detail of the support of Figure 1;
Figure 3 is a perspective view of a motorized cartridge provided with a support according to the invention;
Figure 4 is an electrical diagram of the circuit for adjusting the advancement speed of the support.

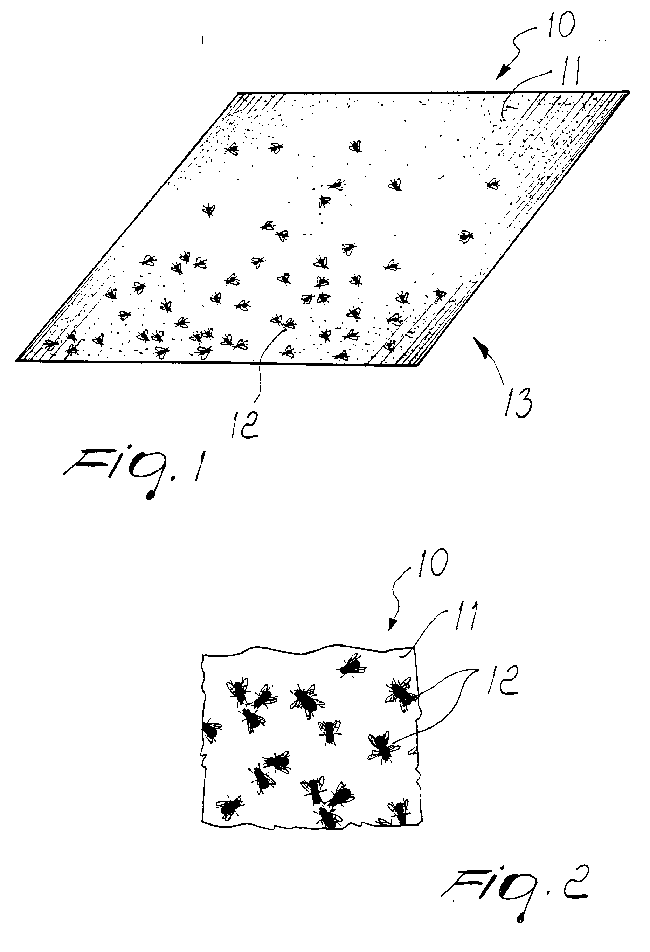

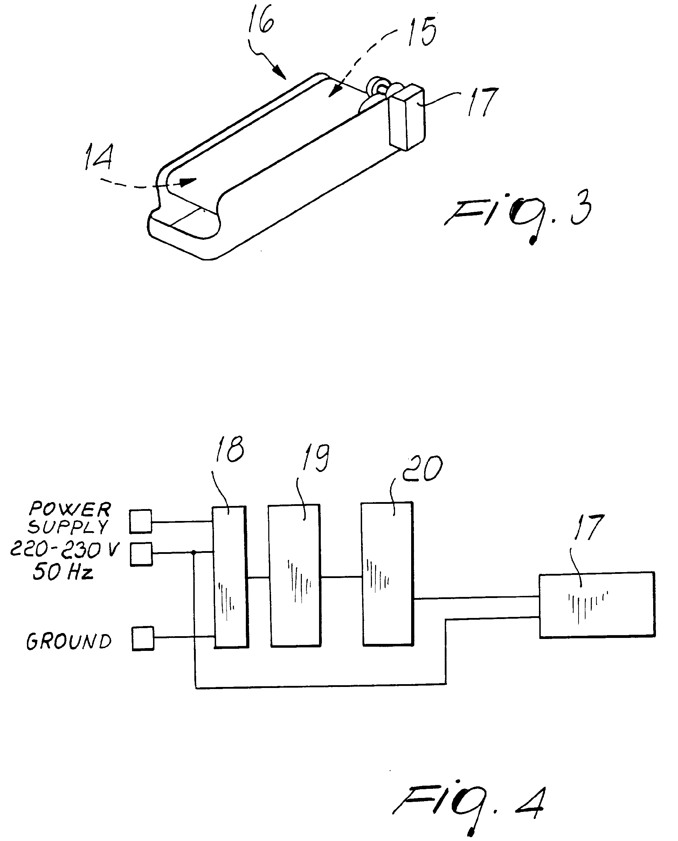

With reference to the figures, a support for adhesives used as traps for capturing insects comprises a sheet 10 made of flexible material, particularly paper-like material; insect-shaped, particularly fly-shaped, outlines 12 are printed uniformly on a surface 11 of said sheet which is designed to be exposed.

In fact it is known that insects, particularly flies, are attracted by the sight of individuals of the same species.

The surface 11 is treated with an ink which contains luminescent pigments.

The conventional organic substances used whenever it is necessary to provide luminescent bands or regions can be used conveniently.

In fact, there are solid, liquid or gaseous substances which, when impinged upon by electromagnetic radiation, emit luminescent radiation because their electrons acquire energy, shifting from their normal energy levels to excited levels.

When they return to normality, they release the absorbed energy as luminescent radiation.

If the emitted radiation has the same frequency as the absorbed radiation, one speaks of resonance fluorescence or optical resonance.

Among known inks with luminescent pigments it is possible to use, for example, the green one, which lights up and can be seen by the human eye as well as which, when impinged upon by ultraviolet radiation, reflects the frequencies in the 300-400 nm range, which correspond to the frequencies emitted by actinic tubes used in known devices.

Due to the resonance frequency, the pigments reflect the ultraviolet rays constituting a mirror for them and therefore constituting a very intense source of attraction for insects.

Practical tests have prooved that the capturing efficiency, with respect to the white color that is normally used, is three times as high.

The pigmented surface 11 is covered with a protective film made of polyamide, and an adhesive known per se as hot melt is spread thereon at 90-95 °C.

The layer of adhesive can vary between 5-6 tenths of a millimeter for flies, up to 1 millimeter in order to capture stinkbugs.

The surface 13 of the sheet 10 that is hidden, i.e. not to be exposed, is instead silicone-coated so that the adhesive of the surface 11 of the rolled-up roll (the condition in which the sheet is before use) does not adhere to the hidden surface 13.

The sheet 10 is wound onto a dispenser roller 14 and advanced so that it rolls up on a takeup roller 15 of a cartridge, generally designated by the reference numeral 16, to be installed in a conventional capture device, which is not shown in the figures.

The roller 15 is motorized by a gearmotor 17 being electrically powered at 220 V DC by means of an AC-DC power supply 18 which is connected to an electronic step-up circuit 19 and to a speed switch selector 20 (high, medium, low speed) for the daily advancement of the sheet 10.

This is done in order to be able to request, by acting manually on the switch 20, a variation in the advancement speed and vary the capture capacity according to requirements.

In practice it has been observed that the intended aim and objects of the present invention have been achieved.

By way of a simple operation for treatment with luminescent-pigment inks and by varying the advancement speed of the sticky ribbon, the capture efficiency of supports for adhesives used as a trap in insect capturing devices has been increased considerably.

The support substantially has the same appearance as known supports, except for the different coloring, and can therefore be used as a replacement thereof both in known devices, as a refill, and in newly manufactured ones.

The invention thus conceived is susceptible of numerous modifications and variations, all of which are within the scope of the appended claims.

All the details may furthermore be replaced with other technically equivalent elements.

In practice, the materials used, so long as they are compatible with the contingent use, as well as the dimensions, may be any according to requirements.

The disclosures in Italian Patent Application No. PD2000A000159 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A support for adhesives used as a trap in insect capturing devices of the type that comprises a sheet (10) made of flexible material, on a surface (11) of which, arrangeable to be exposed, a layer of adhesive is spread, said layer constituting a trap for the insects that land thereon, **characterized in that** said surface (11) to be exposed is treated with at least one ink which contains luminescent pigments.

2. The support according to claim 1, **characterized in that** said pigments are green.

3. The support according to claim 1, **characterized in that** said luminescent pigments have a radiation which is substantially within spectrum of 300-400 nm.

4. The support according to one or more of the preceding claims, **characterized in that** said at least one ink treated surface (11) is coated with a protective film.

5. The support according to claim 4, **characterized in that** said protective film is made of polyamide.

6. The support according to one or more of the preceding claims, **characterized in that** said at least one ink treated surface (11) is arranged on the support after printing insect outlines (12).

7. A cartridge for the support according to one or more of the preceding claims, **characterized in that** it comprises a dispenser roller (14) from which said sheet (10) is unwound and a takeup roller (15) onto which said sheet (10) winds, at least one (15) of said rollers being motorized by way of an electric gearmotor (17) with an electronic step-up circuit (19) and a selector (20) with multiple speeds.
